# FASCICULE DE BREVET EUROPEEN

(11) **EP 0 317 930 B1**
(45) Date de publication et mention de la délivrance du brevet: **10.11.1993**
(21) Numéro de dépôt: 88119335.3
(22) Date de dépôt: 21.11.1988
(51) Int. Cl.: H04L 12/54

(54) **Dispositif de commutation de données transmises par multiplexage temporel asynchrone**
Vermittlungseinrichtung für im asynchronen Zeitmultiplexverfahren übertragene Daten
Switching apparatus for data transmitted by the asynchronous time-division multiplex method

(30) Priorité: 27.11.1987 FR 8716475
(43) Date de publication de la demande: 31.05.1989
(73) Titulaire: ALCATEL CIT, 75008 Paris (FR)
(72) Inventeur: Bakka, Raymond, F-92190 Meudon (FR)
(74) Mandataire: Weinmiller, Jürgen

(56) Documents cités:
- EP-A- 0 025 225
- EP-A- 0 126 196
- EP-A- 0 230 847
- EP-A- 0 300 876
- WO-A-86/03642
- FR-A- 2 526 613
- US-A- 3 979 733
- Proceedings Computer Networking Symposium, Washington, DC, 17-18 novembre 1986, pages 141-150; IEEE, New York, US; S. Nojima et al.: "High speed packet switching network for multi-media information"

## Description

La présente invention concerne un élément de commutation de données transmises par multiplexage temporel asynchrone, appelé aussi matrice de commutation temporelle asynchrone en mode ATD (pour Asynchronous Time Division). Le terme "données" doit ici se comprendre dans son acception la plus large et recouvre les informations de parole, d'image et toutes sortes de données, au sens usuel, à transmettre et commuter dans le cadre du réseau numérique à intégration de services (RNIS).

Dans la transmission temporelle asynchrone, telle qu'elle est ici entendue, le milieu de transmission d'une liaison de tranmission est temporellement divisé en créneaux égaux véhiculant chacun une cellule, c'est-à-dire un groupe comprenant un nombre déterminé d'éléments d'information binaire ou bits, incluant une étiquette comportant une indication de destination et un champ de données contenant l'information de communication proprement dite. Le débit de la liaison de transmission, dans les projets actuels, est de l'ordre de plusieurs centaines de mégabits par seconde.

La commutation consiste à recevoir l'information numérique ainsi structurée de plusieurs liaisons d'entrée et à retransmettre cette information sur plusieurs liaisons de sortie. Plus précisément, une cellule reçue sur l'une des liaisons d'entrée est retransmise sur une des liaisons de sortie, désignée par l'indication de destination incluse dans cette cellule.

Un élément de commutation est un dispositif unitaire accomplissant une telle commutation entre un nombre défini de liaisons d'entrée et un nombre défini de liaisons de sortie. De tels éléments de commutation peuvent être assemblés en un réseau de commutation à plusieurs étages. Dans ce cas, l'indication de destination devra pourvoir aux besoins de chacun des éléments de commutation traverses.

Au niveau d'un élément de commutation et dans un état de commutation stationnaire, les cellules parvenant d'une liaison d'entrée et qui sont destinées à une même liaison de sortie constituent un flux de données dont le débit moyen est constant, mais dont le débit instantané est sujet à des fluctuations que l'on peut considérer comme aléatoires. Les cellules retransmises sur une liaison de sortie proviennent de plusieurs liaisons d'entrée et représentent l'addition de plusieurs flux indépendants. Les moyens de commande du réseau doivent être tels que le débit moyen correspondant à cette addition soit au plus égal à la capacité de transmission de la liaison de sortie, pour éviter tout engorgement. Mais, pour des raisons d'efficacité, ce débit total moyen doit pouvoir être aussi proche que possible de la capacité de transmission nominale de la liaison. Cela entraîne que l'addition des débits instantanés dépassera de temps à autre la capacité de transmission de la liaison de sortie. En dehors de ces périodes de pointe, cette capacité ne sera pas pleinement employée.

Au sein d'un élément de commutation, les considérations qui précèdent conduisent à ce que soit prévue une mémoire tampon recevant les cellules provenant des liaisons d'entrée et les conservant jusqu'à ce qu'elles puissent être retransmises sur les liaisons de sortie.

Un élément de commutation répondant au besoin que l'on vient de définir fait l'objet du brevet français n°2 538 976. On y décrit un élément de commutation de données transmises par multiplexage temporel asynchrone comprenant des circuits de réception associés chacun à une liaison d'entrée et fournissant des cellules reçues par cette liaison d'entrée, des circuits d'émission associés chacun à une liaison de sortie et envoyant des cellules retransmises sur cette liaison de sortie, une mémoire tampon enregistrant des cellules reçues fournies par les circuits de réception et délivrant des cellules à retransmettre aux circuits d'émission, ainsi qu'on dispositif d'adressage de la mémoire tampon comprenant une source d'adresses d'enregistrement et une source d'adresses de lecture.

Les cellules reçues apparaissent sur un bus conduisant à la mémoire tampon dans laquelle les cellules reçues des différentes liaisons d'entrée sont cycliquement enregistrées. Parallélement, l'étiquette de chaque cellule est analysée, au moyen d'une mémoire de commande, et fournit l'adresse de la liaison de sortie à laquelle la cellule est destinée. Cette adresse désigne une mémoire du type "premier entré - premier sorti", appelée couramment FIFO (pour First In - First Out), associée à cette liaison de sortie. Elle permet d,y inscrire l'adresse de l'emplacement de mémoire tampon dans lequel a été enregistrée la cellule considérée. La FIFO de sortie de chaque liaison de sortie indique ainsi où doivent être lues dans la mémoire tampon les cellules à retransmettre sur cette liaison de sortie.

L'adressage de la mémoire tampon pour y enregistrer les cellules reçues sur les liaisons d'entrée de l'élément de commutation est, comme indiqué plus haut de type cyclique, une base de temps fournissant les adresses des emplacements d'enregistrement de la mémoire tampon, l'une après l'autre et les cellules successivement présentées par les liaisons d'entrée étant enregistrées dans l'ordre, dans ces emplacements. On peut en conclure que tout se passe, comme si la mémoire tampon était divisée en autant de parties de mémoire qu'il existe de liaisons d'entrée. Le nombre des emplacements de mémoire dans chaque partie est le même pour toutes les liaisons d'entrée. Il doit permette, dans les conditions évoquées ci-dessus de faire face aux besoins d'enregistrement propres à la liaison d'entrée la plus chargée.

La diffusion d'une cellule, c'est-à-dire sa retransmission d'une entrée vers plusieurs sorties du dispositif de commutation pose un problème : un emplacement de la mémoire tampon ne peut pas être réutilisé aussitôt que la cellule qu'il contient a été émise sur une sortie, car cette cellule doit éventuellement être émise encore sur d'autres sorties. La demande de brevet européen n° 0 300 876 (citée au titre de l'article 54 (3) de la Convention sur le Brevet Européen) décrit un dispositif de commutation permettant la diffusion d'un paquet de données, et dans lequel la gestion de la mémoire tampon consiste à :
- compter le nombre de sorties destinataires en comptant le nombre de fois où l'identité de ce paquet est inscrite dans les files de sortie correspondant respectivement aux sorties;
- décrémenter le nombre ainsi déterminé, chaque fois qu'une lecture est réalisée dans l'emplacement de mémoire tampon contenant le paquet de données considéré ;
- libérer cet emplacement lorsque le nombre décrémenté atteint zéro. Le but de la présente invention est aussi de réutiliser rapidement les emplacements de la mémoire tampon d'un dispositif de commutation, tout en permettant la diffusion d'une cellule vers plusieurs sorties.

Un objet de l'invention est un dispositif de commutation de données transmises par multiplexage temporel asynchrone comprenant des circuits de réception associés chacun à une liaison d'entrée et fournissant des cellules reçues par cette liaison d'entrée, des circuits d'émission associés chacun à une liaison de sortie et envoyant des cellules retransmises sur cette liaison de sortie, une mémoire tampon enregistrant des cellules reçues fournies par les circuits de réception et délivrant des cellules à retransmettre aux circuits d'émission, ainsi qu'un dispositif d'adressage de la mémoire tampon comprenant :
- un compteur d'adresses pourvu d'une entrée d'indexation recevant un signal d'indexation faisant progresser le compteur d'un pas consécutivement à l'enregistrement d'une cellule dans la mémoire tampon :
- une mémoire d'adresses libérées recevant les adresses des emplacements de mémoire tampon libérés par des cellules déjà retransmises et fournissant ces adresses à la place du compteur d'adresses, dès qu'elle en détient au moins une :
   caractérisé en ce que, pour permettre la retransmission d'une cellule reçue vers plusieurs liaisons de sortie (diffusion), il comprend aussi :
- une mémoire de diffusion comprenant un emplacement de mémoire pour chacune des adresses de la mémoire tampon, prévu pour enregistrer un bit correspondant à chaque liaison de sortie ;
- des moyens d'inscription permettant de donner à ce bit une valeur particulière lorqu'une cellule enregistrée dans l'emplacement de mémoire de la mémoire tampon doit être retransmise sur la liaison à laquelle il correspond ;
- des moyens d'effacement pour donner à ce bit la valeur opposée lorsque la cellule considérée a été retransmise sur la liaison à laquelle il correspond ;
- ainsi que des moyens de libération des cellules permettant l'inscription de l'adresse de la cellule considérée dans la mémoire d'adresses libérées seulement lorsque tous les bits de l'emplacement considéré de la mémoire de diffusion ont ladite valeur opposée.

Les différents objets et caractéristiques de l'invention seront exposés dans la description qui va suivre, fournie A titre d'exemple non limitatif, en se reportant aux figures annexées qui représentent :
- la figure 1, le diagramme simplifié de l'ensemble d'un exemple de réalisation de l'élément de commutation de l'invention,
- la figure 2, le format d'une cellule,
- la figure 3, des courbes représentant les différents signaux de base de temps utilisés dans l'élément de commutation de l'invention,
- la figure 4, un diagramme plus détaillé du circuit de réception CR1 de la figure 1,
- la figure 5, le diagramme d'une variante de l'élément de commutation de la figure 1,
- la figure 6, ie diagramme de dispositions additionnelles utilisées dans le cas où l'élément de commutation de l'inention doit permettre la diffusion.

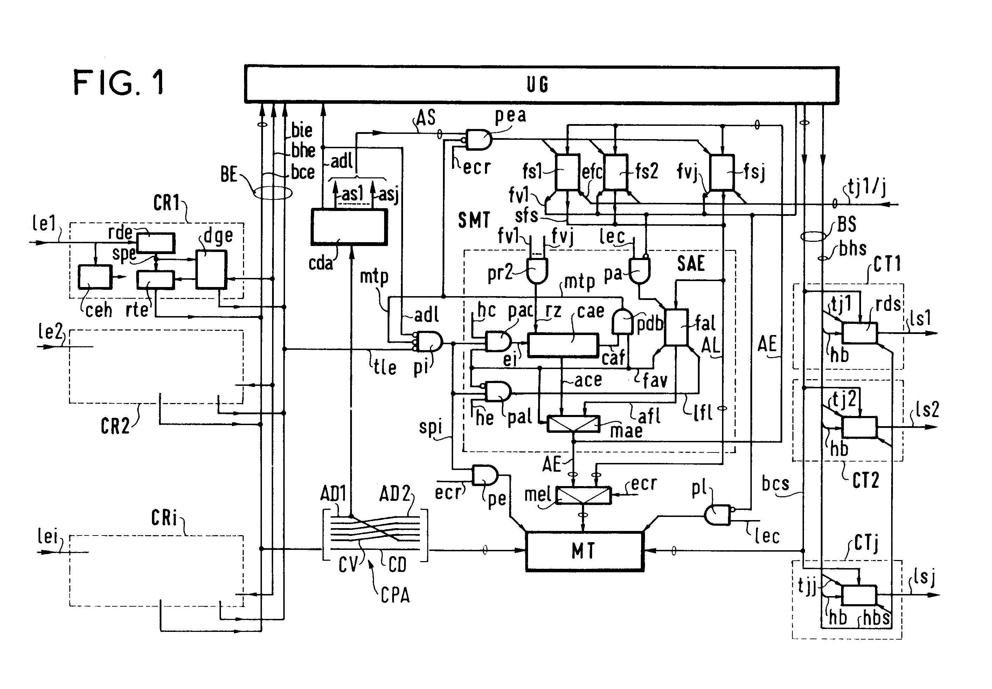

La figure 1 représente le diagramme simplifié de l'ensemble d'un exemple de réalisation de l'élément de commutation de l'invention, c'est-à-dire d'une matrice de commutation temporelle asynchrone en mode ATD, dans le cas d'un acheminement du type auto-directeur.

Cette matrice comprend i circuits de réception semblables CR1 à CRi à chacun desquels est connectée l'une des i liaisons d'entrée le1 à lei. Le circuit CR1 est partiellement explicité, tandis que les circuits CR2 et CRi ne sont que sommairement indiqués, afin de ne pas surcharger le dessin.

Le circuit de réception CR1 comprend un circuit d'extraction d'horloge ceh qui produit un signal d'horloge synchrone avec les signaux reçus sur la liaison le1 et permet, entre autres, de détecter les signaux numériques présents sur la liaison le1, pour les introduire, en série, dans un registre à décalage d'entrée rde. Ce registre à décalage d'entrée est capable de contenir une cellule de transmission entière et de la fournir en parallèle sur sa sortie spe en direction d'un registre tampon d'entrée rte qui peut être du type FIFO. Le circuit de réception CR1 comprend encore un dispositif de gestion d'entrée dge qui reçoit les cellules fournies en parallèle à la sortie du registre rde, qui commande le registre tampon d'entrée rte et qui, notamment, en permet la lecture. A cette fin, le dispositif de gestion dge est connecté à un bus d'horloge d'entrée bhe qui lui fournit des signaux de commande et à un bus d'information d'entrée bie, sur lequel il fournit des signaux d'information. Le registre tampon d'entrée rte, quant à lui, est connecté à un bus de cellules d'entrée bce.

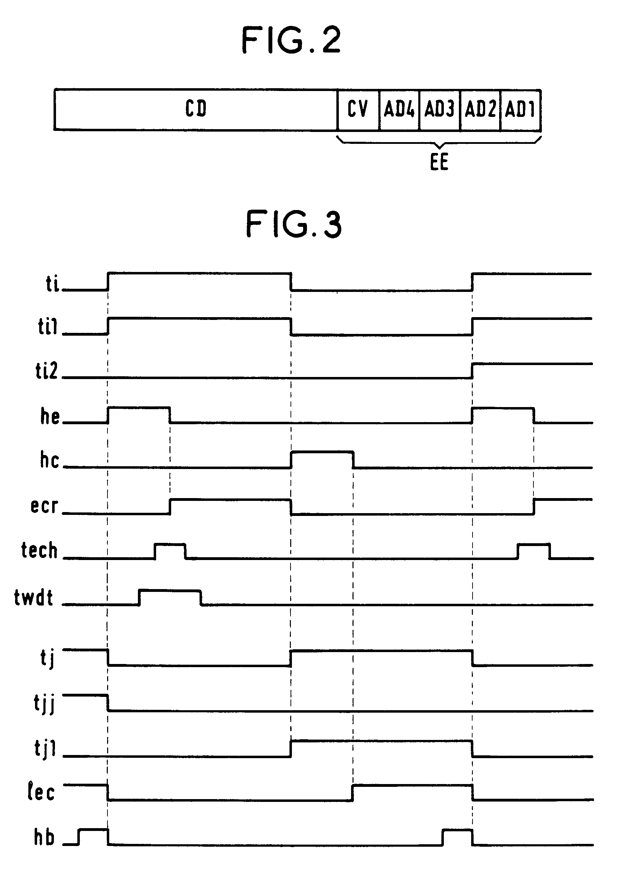

Ces trois bus bhe, bie et bce forment collectivement le bus d'entrée BE. Ce bus BE est temporellement partagé entre les circuits de réception dans un cycle CE dont la durée est au plus celle de la transmission d'une cellule sur les liaisons d'entrée et qui comprend i périodes égales ti, référencées individuellement ti1 à tii (voir figure 3), une pour chacun des circuits de réception CR1 à CRi.

Entre autres fonctions, le dispositif de gestion dge est chargé de reconnaître les périodes dans lesquelles aucune cellule n'est présentée par le circuit de réception CR1 sur le bus bce et de les signaler en tant que telles en appliquant un signal de temps libre sur le conducteur tle du bus bhe.

Le système de mémoire tampon SMT reçoit donc, dans chaque période ti, soit une cellule CL reçue d'un circuit de réception CR, soit un signal de temps libre tle.

Le format d'une cellule CL est illustré à la figure 2. La cellule comprend un champ de données CD et une étiquette EE comprenant, à titre d'exemple seulement, quatre adresses AD1 à AD4 et un numéro d'affectation CV. Le champ de données peut comprendre 32 octets. La première adresse AD1 est celle qui doit servir d'indication de destination à la matrice considérée. Les adresses suivantes doivent servir dans des matrices que devra traverser ultérieurement la cellule considérée. Le numéro d'affectation CV a un rôle similaire vis-à-vis de l'équipement terminal du réseau qui, ultimement, recevra la cellule et devra l'acheminer. Comme les matrices d'un réseau sont toutes semblables, chacune d'elle doit recevoir une indication de destination donnée par la première adresse de l'étiquette EE de la cellule qu'elle reçoit. Pour qu'il en soit ainsi, la présente matrice comprend un câblage de permutation d'adresses CPA, entre le bus bce et la mémoire tampon MT, grâce auquel l'adresse AD1 passe en dernière position dans l'étiquette EE, alors que les adreses AD2 à AD4 et CV avancent d'une position. Donc, après retransmission de la cellule, l'adresse AD2 sera l'adresse AD1 pour une matrice de l'étage suivant d'un réseau de matrices telles que celle de la figure 1.

Comme on le voit à la figure 1, l'adresse AD1 est transmise à un circuit de décodage d'adresse cda. Celui-ci fournit en réponse un signal sur l'un de j conducteurs d'adresse de sortie AS individuellement référencés as1 à asj, si la cellule doit être retransmise, et cela identifie alors la liaison de sortie sur laquelle il faut la retransmettre. Dans le cas d'une cellule qui ne doit pas être retransmise, par exemple dans le cas d'une cellule destinée à l'unité de gestion UG de la présente matrice, le circuit de décodage fournit à la place, un signal sur le conducteur adl.

On considèrera, dans un premier temps, que la cellule CL reçue est une cellule de communication devant être retransmise sur l'une des liaisons de sortie ls1 à lsj. Le circuit de décodage d'adresse cda fournit donc un signal sur le conducteur asj, par exemple. Il ne fournit pas le signal adl. Par ailleurs, le signal tle est également absent.

On va aussi supposer qu'un signal mtp est absent, ce qui est vrai tant que la mémoire tampon est en mesure d'enregistrer une cellule d'entrée, comme on le verra par la suite.

Il convient de signaler, à ce point, que d'une manière générale, dans le présent texte, on désignera souvent, pour simplifier, par la même référence un conducteur et le signal qu'il véhicule.

Il résulte de ce qui a été exposé plus haut que la porte d'inhibition pi, de type NON-ET (NAND), fournit un signal spi validant les portes pal et pac déterminant l'obtention d'une nouvelle adrese d'enregistrement d'une source d'adresses d'enregistrement SAE. Cette source d'adresses d'enregistrement SAE comprend essentiellement une mémoire d'adresses fal, avantageusement de type FIFO, contenant les adresses d'emplacements d'enregistrement dans la mémoire tampon MT qui viennent d'être libérés après usage, ainsi qu'un compteur d'adresses cae ayant autant de positions utiles que la mémoire tampon comprend d'emplacements de mémoire et qui progresse d'une position à l'autre jusqu'à ce qu'il atteigne une position d'arrêt dans laquelle il fournit un signal caf ; cela sera explicité plus loin.

Tant qu'une adresse au moins est enregistrée dans la FIFO fal, une sortie de cette FIFO fournit un signal de niveau nul sur un conducteur fav, ce qui tend à valider la porte pal et bloque une porte pdb, laquelle fournit alors un signal nul débloquant la porte pi et la porte pea.

Ainsi, dans l'intervalle de temps d'obtention d'adresse caractérisé par un signal he situé au début de la période ti (voir figure 3), la porte pal conduit et fournit un signal lf1 appliqué à la FIFO fal et provoquant dans celle ci une opération de lecture qui délivre l'adresse d'un emplacement libre de la mémoire tampon MT sur les conducteurs afl. Cette adresse atteint un multiplexeur mae, alors que celui-ci reçoit aussi le signal de niveau nul présent sur le conducteur fav. En réponse, le multiplexeur mae fournit l'adresse AE.

L'intervalle de temps d'écriture dans la mémoire tampon MT est caractérisé par un signal ecr situé à la fin de la période ti (voir figure 3) et appliqué à un multiplexeur d'adresses d'écriture/lecture mel, pour l'orienter vers la source d'adresses d'enregistrement SAE : l'adresse AE est ainsi fournie à la mémoire tampon MT.

Au même instant, la porte de commande d'écriture pe, également validée par le signal de sortie spi de la porte pi, transmet le signal ecr à la mémoire tampon MT, dans laquelle, en réponse, s'effectue une opération d'écriture. La cellule présente sur le bus BE, telle que modifiée par le câblage de permutation CPA est écrite dans un emplacement libre désigné par l'adresse AE.

Par ailleurs, le même signal d'écriture ecr valide des portes pea, de sorte que celle qui reçoit le signal asj du circuit de décodage cda, fournit un signal de commande d'écriture à l'une de j FIFO de sortie, fs1 à fsj, associées chacune, respectivement, à l'une des liaisons de sortie ls1 à lsj. Ainsi, celle des FIFO qui correspond à la liaison de sortie à laquelle est destinée la cellule reçue, reçoit-elle l'adresse AE de l'emplacement où la cellule est enregistrée dans la mémoire tampon MT, appliquée à l'entrée de toutes les FIFO fs1 à fsj : elles l'enregistre, en vue de la retransmission ultérieure de la cellule considérée sur la liaison de sortie correspondante.

Le processus que l'on vient de décrire se reproduit à chaque période ti, pour des circuits de réception successifs, tant que ceux-ci fournissent des cellules CL devant être retransmises et tant que la FIFO fal contient au moins une adresse d'emplacement de mémoire tampon disponible.

S'il advient que la FIFO fal ne contienne plus d'adresse, le signal fav change de niveau, bloque la porte pal et ouvre la porte pac. On supposera qu'alors le compteur d'adresses cae n'a pas atteint la position d'arrêt dans laquelle il fournit le signal caf. De ce fait, la porte pdb fournit un signal mtp de niveau nul, comme auparavant.

Le signal fav au niveau haut commute le multiplexeur mae vers la sortie ace du compteur cae. C'est donc l'adresse fournie par le compteur cae qui sera utilisée, à la place de l'adresse fournie par la FIFO fal, pour constituer l'adresse AE. Comme dans le cas précédent, cette adresse est utilisée pour l'enregistrement dans la mémoire tampon MT de la cellule incidente. Elle est d'autre part inscrite dans la FIFO de sortie fs1 à fsj correspondant à la liaison de sortie à laquelle cette cellule est destinée.

Ensuite, un signal hc est retransmis par la porte pac sur une entrée d'indexation ei du compteur d'adresse d'écriture cae qui avance d'un pas et fournit une adresse augmentée d'une unité sur sa sortie ace, en prévision de l'enregistrement de la cellule suivante, à moins qu'il n'atteigne sa position d'arrêt.

On vient donc de voir comment les cellules de communication, qui doivent être retransmises, sont enregistrées dans la mémoire tampon, tandis que les adresses des emplacements de mémoire qui les contiennent sont inscrites dans des FIFO de sortie.

Il faut encore considérer le cas où aucune adresse n'est disponible pour l'enregistrement dans la mémoire tampon. C'est le cas où la FIFO fal fournit le signal fav, tandis que le compteur cae fournit le signal caf. La porte pdb fournit en réponse le signal mtp, lequel bloque la porte pi et les portes pea. De la sorte, une cellule incidente qui ne peut pas être enregistrée dans la mémoire tampon est traitée comme une cellule vide. Son contenu est perdu, ce qui est inévitable, mais elle ne perturbe pas les opérations en cours.

On doit prévoir des moyens pour que le compteur cae quitte de temps à autres sa position d'arrêt. Cela peut se faire, par example, comme illustré à la figure 1, à l'aide d'une porte prz, de type ET, qui fournit un signal rz lorsque toutes les FIFO de sortie sont vides et fournissent respectivement les signaux fv1...,fvj. Ce signal réinitialise le compteur cae, après quoi il fournira les adresses successives de tous les emplacements de la mémoire tampon MT, au fur et à mesure des besoins, comme décrit précédemment. Le même signal peut également réinitialiser la FIFO fal ou, par tout autre moyen, faire que les adresses qu'elle contient ne soient pas utilisées.

On va maintenant considérer le cas d'une cellule qui ne doit pas être retransmise. Ce cas sera d'abord illustré par la réception d'une cellule destinée à l'unité de gestion UG. Cette cellule porte une adresse AD1 qui, décodée par le circuit de décodage cda, donne lieu à l'application d'un signal sur le conducteur adl, aucun signal n'étant par contre fourni sur les conducteurs AS.

Le bus BE est prolongé jusqu'à l'unité de gestion UG. Le conducteur adl est également prolongé jusqu'à l'unité de gestion UG. Le signal de décodage appliqué sur ce conducteur invitera donc l'unité de gestion UG à prendre connaissance de l'information présente sur le bus BE. On obtiendra ainsi l'avantage que l'unité de gestion UG ne sera appelée à connaître que les cellules qui lui sont destinées, ce qui réduira sa charge au minimum.

Un deuxième cas, en fait similaire au précédent, est celui qui résulte de la réception d'une cellule "vide" par un circuit de réception CR. Par exemple, la matrice d'un étage de commutation existant en amont de la présente matrice n'a aucune information à transmettre dans une cellule à transmettre sur la liaison le1 jusqu'au circuit de réception CR1. Elle envoi donc une cellule vide, comme indiqué dans le préambule de cette description. La cellule vide est identifiée par le dispositif de gestion dge, au moment où elle est affichée sur la sortie spe du registre rde. Cette cellule n'est alors pas transférée dans le registre tampon d'entrée rte. Il en résulte un peu plus tard, durant une période du bus BE affectée à la liaison le1, que le registre rte est vide ; aucune cellule n'est fournie sur le bus bce, et le dispositif de gestion dge délivre un signal tle sur le bus bie. L'unité de gestion UG, recevant ce signal, sera informée du fait.

Dans les deux cas typiques que l'on vient d'évoquer, il n'y a pas lieu de préparer la retransmission d'une cellule reçue. L'invention prévoit donc des mesures permettant de ne pas occuper - inutilement - un emplacement dans la mémoire tampon MT. Dans la pratique, selon la conformation des circuits d'adressage de la mémoire tampon, divers moyens peuvent permettre d'atteindre le résultat. Le plus simple, et c'est celui du présent exemple de réalisation, consiste à inhiber les opérations relatives à l'écriture d'une cellule dans la mémoire tampon.

A cette fin, la porte pi est bloquée par l'un ou l'autre des signaux adl et tle et elle fournit un signal d'inhibition spi, sur les accès d'inhibition des portes pac et pal, tel que ces deux portes sont bloquées. Du fait que ces portes restent bloquées, d'une part, la FIFO fal ne pourra pas être lue, et le compteur cae ne pourra pas progresser. D'autre part, le signal d'inhibition spi bloque également la porte pe, de sorte que l'opération d'écriture n'aura pas lieu dans la mémoire tampon MT. De plus, le circuit de décodage d'adresse cda ne fournissant aucun signal sur les conducteurs AS, aucune adresse AE ne sera enregistrée dans les FIFO de sortie fs1 à fsj.

On évite ainsi d'occuper un emplacement de la mémoire tampon MT, pour augmenter l'efficacité de l'élément de commutation (à volume de mémoire inchangé par rapport aux solutions antérieures) ou pour permettre une réduction du volume de la mémoire tampon (à performances égales).

Par ailleurs, comme aucune adresse n'est inscrite dans les FIFO de sortie, cela entraînera, avec plus ou moins de retard, l'envoi d'une cellule vide, comme on le verra plus loin.

On va maintenant considérer comment les cellules enregistrées sont retransmises sur les liaisons de sortie.

Chacune des liaisons de sortie ls1 à lsj est équipée d'un circuit de sortie CT1 à CTj qui se résume en un registre de conversion parallèle-série rds. Ces circuits de sortie CT sont connectés à un bus BS, temporellement partagé entre tous les circuits de sortie, dans un cycle CS dont la durée est celle de la transmission d'une cellule sur les liaisons de sortie et qui comprend j périodes égales tj, individuellement référencées tj1 à tjj (figure 3). Ce bus BS, semblable au bus d'entrée BE, comprend un bus de cellules de sortie bcs et un bus d'horloge de sortie bhs. Au cours d'une période, définie par un signal tj qui lui est propre, un circuit de sortie CT1, par exemple, charge dans son registre rds la cellule alors présente sur le bus bcs, sous l'effet du signal d'horloge hs (voir figure 3). Dès cet instant, en réponse à des impulsions d'horloge hbs, la cellule entière est transférée en série du registre rds sur la liaison ls1. Il en va de même pour les autres liaisons de sortie.

La fourniture des cellules à chacune des liaisons de sortie s'effectue par lecture de celles-ci dans la mémoire tampon MT, du moins tant qu'il existe des cellules à retransmettre.

Au début d'une période tj, l'une des FIFO de sortie fs1 à fsj, fs1 par exemple, recevant un signal tj1 qui lui est propre, sur son entrée de commande de lecture efc, fournit und adresse de lecture AL. Compte tenu du mode de fonctionnement d'une FIFO, il s'agit de l'adresse de la l'emplacement contenant la cellule qui attend depuis le plus longtemps, dans la mémoire MT, le moment d'être retransmise sur la liaison ls1. Dans le même temps, la FIFO fs1 fournit un signal de niveau nul sur la sortie fv1, ce qui signifie qu'elle n'est pas vide. Appliqué à une entrée inverseuse de la porte de lecture p1, ce signal permet la transmission d'un signal de commande de lecture lec à la mémoire tampon pour y commander l'exécution d'une opération de lecture. L'adresse AL, pour cette opération, est celle que fournit la FIFO fs1 sur sa sortie sfs, le multiplexeur d'adresse d'écriture/lecture mel étant orienté vers cette sortie du fait de l'absence du signal ecr. La cellule ainsi lue est transmise par la mémoire tampon MT sur le bus bcs. De là, sous l'effet d'un signal d'horloge hs, elle est inscrite dans le registre rds du circuit de transmission CT1.

Simultanément, l'adresse AL fournie par la FIFO de sortie fs1 sur la sortie sfs est fournie à l'entrée de la FIFO fal qui reçoit par ailleurs un signal de commande d'écriture en provenance de la porte pa validée par le niveau nul sur le conducteur fv1 et conduisant de ce fait le signal lec. Cette adresse, correspondant à un emplacement en cours de lecture, donc en voie d'être libéré, dans la mémoire tampon MT, est ainsi enregistrée dans la FIFO fal, pour être réutilisée, comme on l'a déjà décrit.

Le processus que l'on vient de décrire se reproduit de manière semblable à chaque période tj, pour les liaisons de sortie successives, tout au moins tant que des cellules à retransmettre sont fournies par la mémoire MT.

On va donc maintenant considérer le cas où il n'existe pas de cellule à retransmettre. En reprenant l'exemple de la liaison ls1 et de sa FIFO de sortie fs1, aucune adresse n'existe plus dans cette FIFO et celle-ci fournit alors un signal fv1 indiquant qu'elle est vide.

Le signal fv1 bloque la porte pl et interdit de ce fait toute opération de lecture dans la mémoire tampon MT. Il bloque aussi la porte pa et empêche toute opération d'écriture dans la FIFO fal. De plus, il est transmis à l'unité de gestion UG pour lui signaler que la matrice de commutation n'a pas de cellule à transmettre sur la liaison de sortie considérée. En retour, par exemple, l'unité de gestion UG fournit sur le bus bcs l'information caractéristique d'une cellule vide.

Le bus BS, tout comme le bus BE, est en effet prolongé jusqu'à l'unité de gestion UG, ce qui lui permet de transmettre des cellules de service sur les liaisons de sortie, s'il n'y a pas de cellule de communication à retransmettre. La cellule vide est ainsi, en quelque sorte, l'une de ces cellules de service.

La cellule vide transmise par l'unité de gestion UG sur le bus bcs est acheminée par le circuit de sortie CT1 sur la liaison de sortie ls1 tout comme une cellule de communication venant de la mémoire tampon MT.

L'élément de commutation que l'on vient de décrire pourrait ne pas comprendre la FIFO fal et le compteur d'adresses cae devrait alors fournir cycliquement toutes les adresses de la mémoire tampon MT pour l'enregistrement des cellules de communication reçues. Par rapport à la solution connue mentionnée dans le préambule, le fait que seules les cellules de communication à retransmettre soient enregistrées dans la mémoire tampon MT apporte le double avantage que l'on évite d'occuper inutilement des emplacements de mémoire et que l'on mélange en fait les débits de toutes les liaisons d'entrée de sorte que, statistiquement, le débit maximal de l'ensemble des i liaisons d'entrée est moindre que i fois le débit maximal d'une liaison, pour ce qui est des besoins d'enrigistrement dans la mémoire tampon.

L'introduction de la FIFO d'adresses libérées fal permet de réutiliser les emplacements de la mémoire tampon MT aussitôt qu'ils sont libérés. A chaque période tj, elle reçoit une adresse libérée, sauf si la FIFO de sortie est vide. A chaque période ti, elle fournit une adresse, sauf s'il n'y a pas de cellule à enregistrer. Les périodes ti et tj étant de durées égales, le contenu moyen de la FIFO fal est constant. Mais un accroissement du débit des entrées, ou une réduction du débit des sorties, en même temps qu'il demande des emplacements additionnels dans la mémoire tampon MT, demande les adresses de tels emplacements à la source d'adresses SAE. La FIFO d'adresses libérées fal peut être assez grande pour contenir toutes les adresses libérées. Ces adresses ont été précédemment fournies par le compteur d'adresses cae. Il arrivera un moment où la FIFO sera vide, alors que le compteur cae aura déjà donné toutes les adresses de la mémoire tampon MT. A cet instant, tous les emplacements de la mémoire tampon MT seront occupés. La source d'adresses ne pouvant fournir d'adresse, la cellule se présentant alors sera refusée, ce qui est inévitable dans de telles circonstances. On pourrait préférer enregistrer quand même la cellule incidente et perdre de ce fait une cellule déjà enregistrée dans la mémoire tampon, cellule appartenant à une autre communication ; il suffit pour cela que le compteur d'adresse ait un fonctionnement cyclique. Dans ce dernier cas, on pourrait donner à la FIFO fal une capacité réduite ; alors, le recours au compteur cae sera plus fréquent, mais certains emplacements de la mémoire, dont l'adresse n'a pas été conservée par la FIFO fal, pleine au moment où ils étaient libérés, pourront être désignés par le compeur cae. Une telle solution pourrait être acceptable si de tels évènement se produisaient rarement.

On va maintenant compléter la description de l'exemple de réalisation illustré par la figure 1. Les différents signaux de commande à caractère cyclique seront engendrés par une base de temps, comme il est habituel dans cette technique. Leur échelonnement ressort de la description. Ils sont illustrés par la figure 3. Les différents composants du diagramme de la figure 1 sont de type classique.

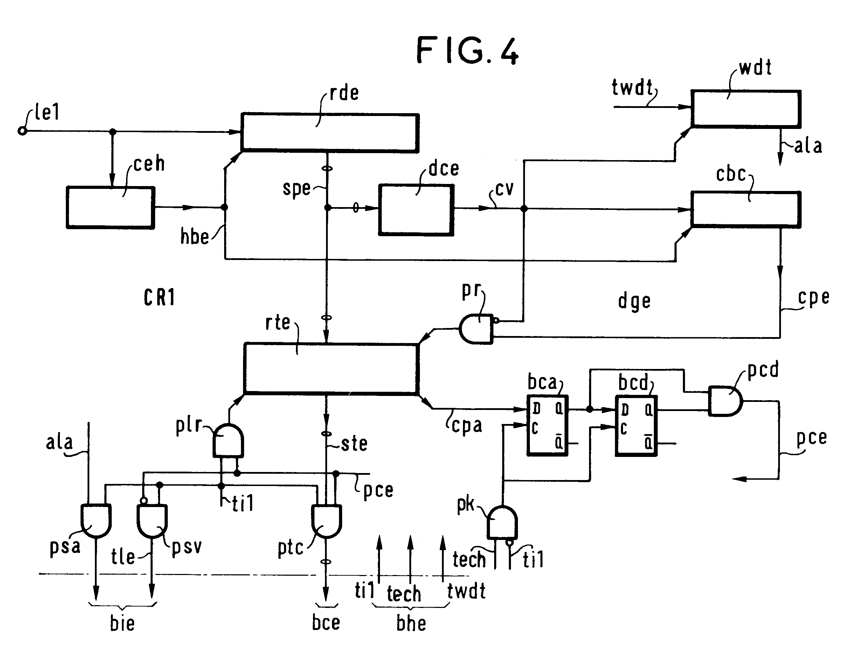

Il ne reste donc qu'à décrire plus en détail une forme de réalisation, représentée à la figure 4, du circuit de réception CR1 de la figure 1 et, plus particulièrement, du dispositif de gestion d'entrée dge qu'il contient.

On y retrouve en effet le circuit d'extraction d'horloge ceh, qui peut être d'un type courant, le registre à décalage d'entrée rde et le registre tampon d'entrée rte. Le reste de l'équipement constitue le dispositif de gestion dge.

A la sortie du registre rde, un circuit de décodage dce identifie la présence d'une cellule vide. Il fournit un signal cv qui remet à zéro un compeur de supervision wdt et un compteur de bits de cellule cbc. Ce même signal cv bloque la porte pr, pour empêcher le transfert de la cellule vide dans le registre tampon rte.

Durant la réception d'une cellule suivante, une cellule de communication par exemple, les impulsions d'horloge bit hbe, non seulement font entrer la cellule dans le registre rde, mais elles font progresser le compeur cbc. Au dernier bit de la cellule, le compteur cbc fournit un signal cpe. Comme il ne s'agit pas d'une cellule vide, la porte pr est passante et le signal cpe commande le chargement dans le registre tampon d'entrée rte d'une cellule complète présente sur la sortie spe du registre rde.

Ce fonctionnement se répète à chaque cellule reçue, pour autant qu'il ne s'agisse pas d'une cellule vide.

A intervalle périodique, par exemple une fois par cycle du bus BE, une impulsion de base de temps twdt est reçue sur le bus d'horloge d'entrée bhe. Elle fait avancer d'un pas le compteur de supervision wdt.

S'il advenait qu'aucune cellule vide ne soit reçue durant un intervalle de temps prédéterminé, le compteur wdt atteindrait une position dans laquelle il fournit un signal ala, afin de donner l'alerte.

Pendant la période ti propre au circuit de réception CR1 considéré, le bus d'horloge d'entrée bhe fournit un signal ti1. Dans chacune des périodes ti, il furnit aussi un signal tech. En dehors de la période ti du circuit CR1, la porte pk est débloquée par le signal ti1. Elle conduit le signal tech, lequel est alors appliqué à l'entrée d'horloge C de deux bascule bca et bcd, de type D. Si une cellule au moins est en attente dans le registre tampon d'entrée rte, celui-ci fournit un signal sur sa sortie cpa, tel que la bascule bca passe en position 1 à la réception du signal tech. Elle fournit alors un signal sur sa sortie Q tel que la bascule bcd passe à son tour en position 1, lors de l'impulsion tech suivante. La porte pcd conduit alors et elle fournit un signal pce.

Au début de la période ti propre au circuit de réception CR1, le signal ti1 débloque les portes psa et psv. La première transmet sur le bus bie le signal ala caractérisant l'absence prolongée de cellules vides, à destination de l'unité de gestion UG. La deuxième transmet, en l'inversant, le signal pce indiquant la présence d'une celule disponible dans le registre rte. Elle fournit ainsi le signal tle, lorsqu'aucune cellule n'est disponible.

Par ailleurs, la porte plr devient passante, sous l'effet des signaux til et pce et elle commande une opération de lecture du registre tampon d'entrée rte, lequel fournit sur sa sortie ste une cellule qui est retransmise sur le bus bce par la porte multiple ptc ouverte par les signaux ti1 et pce.

On voit bien ainsi que la réception d'une cellule vide, qui n'est pas enregistrée dans le registre tampon d'entrée rte, entraîne, plus tard, que le registre rte ne dispose plus de cellule à fournir sur le bus bce, ce qui est détecté, entre deux signaux ti1, par les bascules bca et bcd ; alors, au lieu de fournir une cellule sur le bus bce, le circuit de réception CR1 fournit un signal sur le conducteur tle.

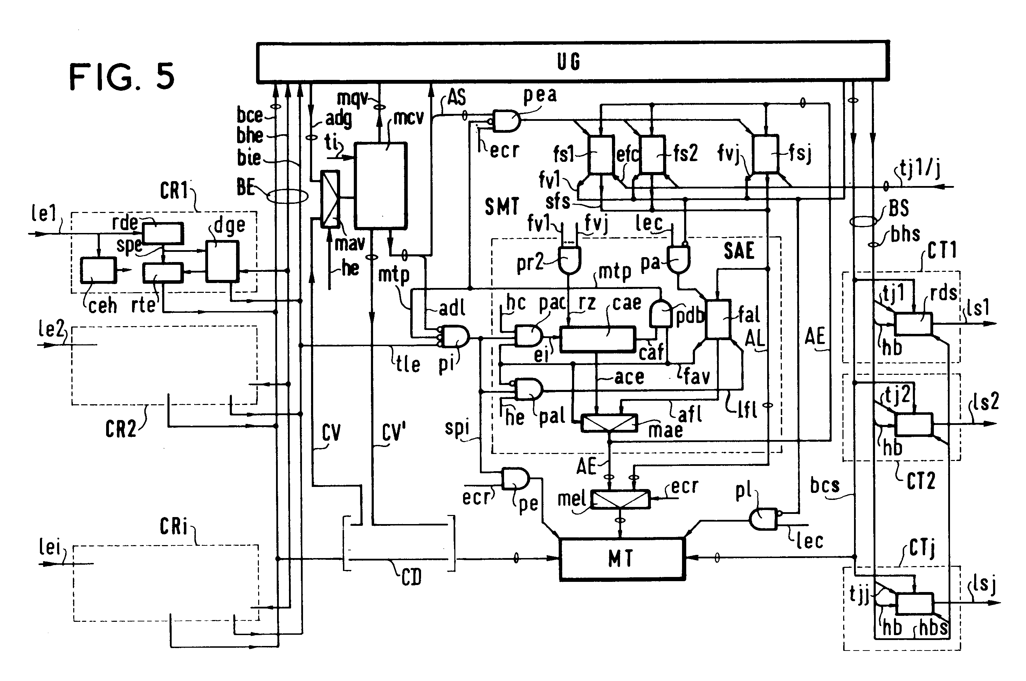

En se tournant vers la figure 5, on va maintenant montrer que l'invention est également applicable dans le cas d'un acheminement par circuit virtuel. Dans ce cas, l'étiquette de chaque cellule, par rapport au format de la figure 2, comprend seulement le numéro de circuit virtuel CV, les adresses étant omises. Comme on peut en juger aisément, le diagramme est le même que celui de la figure 1 et l'on a conservé les mêmes références pour désigner des parties constituantes identiques, à l'exception de ce qui va être maintenant exposé.

Le dispositif de décodage d'adresses est remplacé par une mémoire de circuit virtuels mcv. Celle-ci, lue sous l'effet du signal ti, dans chaque période du bus BE, reçoit alors comme adresse l'indication CV de la cellule reçue, qui lui est transférée par un multiplexeur mav orienté par le signal he. En échange, elle fournit le signal AS, si la cellule doit être retransmise, ou le signal adl, si elle est destinée a l'unité de gestion UG, tout comme le fait le circuit de décodage cda de la figure 1. Le fonctionnement est ensuite inchangé, en ce qui concerne l'acheminement de la cellule reçue.

Par ailleurs, le câblage de permutation CPA n'existe pas, car c'est la mémoire mcv qui fournit une indication de circuit virtuel modifiée CV', à la place de celle qui lui servait d'adresse.

L'unité de gestion accéde enfin à la mémoire mcv par des liaisons adg et mqv, pour y effectuer des operations d'écriture et de lecture. Cela permettra d'y inscrire les informations correspondant à chaque valeur de l'indication CV, dans des emplacements correspondant à ces valeurs, afin que la mémoire mcv se comporte comme une table de traduction.

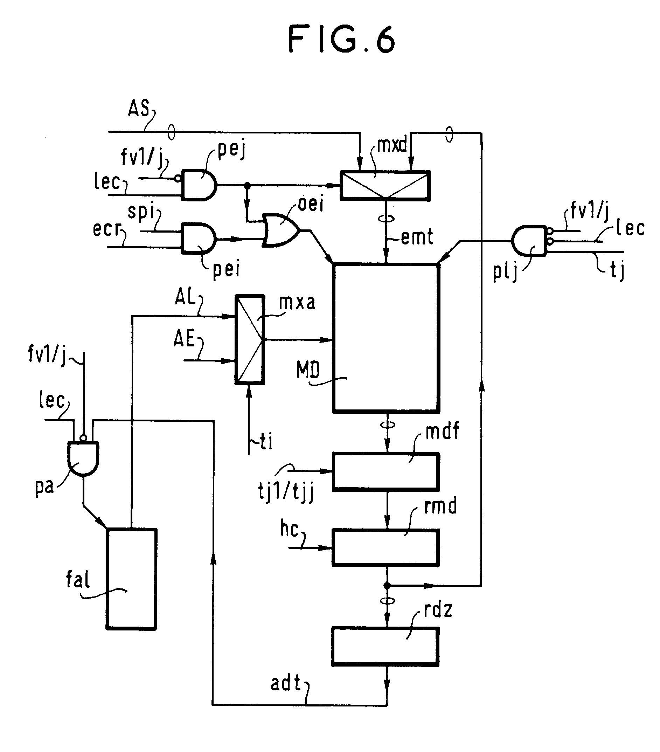

La figure 6 représente des moyens additionnels pouvant être inclus dans l'élément de commutation de connées des figures 1 ou 4, pour permettre la diffusion, c'est-à-dire la transmission d'une cellule sur plusieurs liaisons de sortie. Dans le système de l'art antérieur, il suffit que le circuit de décodage, ou la mémoire de commande, fournisse non pas un signal sur les conducteurs AS, mais plusieurs, ce qui fait que l'adresse AE est enregistrée dans non pas une seule FIFO de sortie, mais plusieurs, de sorte que les liaisons de sortie correspondantes recevront toutes la cellule enragistrée à cette adresse. L'existence d'une mémoire d'adresses libres (la FIFO fal) pose alors un problème. En effet, un emplacement de mémoire tampon servant de source a une diffusion ne redeviendra libre qu'après l'envoi de la cellule sur toutes les liaisons destinataires.

La solution proposée, illustrée par la figure 6, consiste à conditionner l'écriture d'une adresse libérée AL dans la FIFO fal par un signal adt, nécessaire pour débloquer la porte pa. Ce signal est fourni par un dispositif additionnel comprenant essentiellement une mémoire de diffusion MD, ayant un emplacement de mémoire pour chacune des adresses de la mémoire tampon MT, prévu pour enregistrer un bit par liaison de sortie.

Un mot de données est inscrit dans chaque emplacement de cette mémoire de diffusion MD, en même temps qu'une cellule est inscrite dans la mémoire tampon MT, et à la même adresse AE. Le signal ti fourni au multiplexeur d'adresse mxa oriente alors en conséquence celui-ci pour que la mémoire MD reçoive l'adresse AE. Dans l'intervalle de temps de ce signal ti, la porte pei, commandée par les signaux spi et ecr (voir description de la figure 1) fournit un signal de commande d'écriture qui, par un porte OU oei, commande à la mémoire d'exécuter une opération d'enregistrement. L'information à écrire dans l'emplacement de mémoire désigné par l'adresse AE comprend un bit par liaison de sortie et c'est celle, dénommée AS, que fournit le circuit de décodage d'adresse cda (voir figure 1) à l'intention des FIFO de sortie, et qui comprend un bit par liaison de sortie, une valeur binaire de ce bit signifiant que la cellule incidente doit être retransmise sur la liaison de sortie. Dans le cas d'une cellule devant faire l'objet d'une diffusion, bien entendu, plusieurs bits de l'information AS ont cette valeur particulière. Le multiplexeur d'entrée mxd est alors dans la position adéquate pour fournir cette information AS à l'entrée de la mémoire MD, dans laquelle elle est enregistrée à l'adresse AE. Ce fonctionnement se repète pour chacune des cellules reçues et enregistrées dans la mémoire tampon MT.

Dans chaque période tj, pour autant que la FIFO de sortie interrogée ne fournisse pas un signal fv1...,fvj, fv1/j en abrégé, indiquant qu'elle est vide, et donc pour autant qu'elle fournisse une adresse AL d'un emplacement de la mémoire tampon contenant une cellule à retransmettre, une opération de lecture et une opération d'écriture sont successivement effectuée dans la mémoire de diffusion MD. Ces deux opérations d'effectuent à l'adresse AL, l'absence du signal ti orientant le multiplexeur mxa pour qu'il fournisse cette adresse à l'entrée d'adresse de la mémoire MD. L'ordre de lecture est donné par la porte plj, validée par le signal tj et l'absence du signal lec (voir figure 3). Le mot lu est fournit par la mémoire MD à un circuit de masque mdf mettant en coincidence les signaux tj1 à tjj et, dans le même ordre de correspondance, les bits du mot lu dans la mémoire. Cela efface dans la memoire le bit qui marquait que la cellule considérée devait êentre retransmise sur la laison de sortie considérée. Il prend la valeur opposée à ladite valeur particulière. Un registre rmd reçoit le mot masqué, à la fin du signal hc.

La réinscription suit. Elle est commandée par la porte pej validée par les signaux fv1/j et le signal lecn fournissant l'ordre d'écriture par la porte OU oei et orientant le multiplexeur mxd vers la sortie du registre rmd.

Pendant ce temps, le circuit rdz analyse le contenu du registre rmd. Si tous les bits du mot qu'il contient ont la valeur opposée à ladite valeur particulière, c'est-à-dire si la cellule contenue à l'emplacement désigné par l'adresse AL ne doit plus être retransmise sur aucune liaison de sortie, le circuit rdz fournit le signal adt. Ce signal débloque la porte pa et permet l'écriture de l'adresse AL dans la FIFO fal des adresses libérées.

Il est bien évident que les descriptions qui précédent n'ont été données qu'à titre d'exemple non limitatif et que de nombreuses variantes peuvent être envisagées sans sortir pour autant du cadre de l'invention.

## Revendications

1. Dispositif de commutation de données transmises par multiplexage temporel asynchrone comprenant des circuits de réception associés chacun à une liaison d'entrée et fournissant des cellules reçues par cette liaison d'entrée, des circuits d'émission associés chacun à une liaison de sortie et envoyant des cellules retransmises sur cette liaison de sortie, une mémoire tampon enregistrant des cellules reçues fournies par les circuits de réception et délivrant des cellules à retransmettre aux circuits d'émission, ainsi qu'un dispositif d'adressage de la mémoire tampon comprenant :
- un compteur d'adresses (cae) pourvu d'une entrée d'indexation (ei) recevant un signal d'indexation faisant progresser le compteur d'un pas consécutivement à l'enregistrement d'une cellule dans la mémoire tampon :
- une mémoire d'adresses libérées (fal) recevant les adresses des emplacements de mémoire tampon libérés par des cellules déjà retransmises et fournissant ces adresses à la place du compteur d'adresses (cae), dès qu'elle en détient au moins une ;
caractérisé en ce que, pour permettre la retransmission d'une cellule reçue vers plusieurs liaisons de sortie (diffusion), il comprend aussi :
- une mémoire de diffusion (MD) comprenant un emplacement de mémoire pour chacune des addresses de la mémoire tampon (MT), prévu pour enregistrer un bit correspondant à chaque liaison de sortie ;
- des moyens d'inscription (mxd, pei, mxa) permettant de donner à ce bit une valeur particulière lorqu'une cellule enregistrée dans l'emplacement de mémoire de la mémoire tampon (MT) doit être retransmise sur la liaison à laquelle il correspond ;
- des moyens d'effacement (mdf) pour donner à ce bit la valeur opposée lorsque la cellule considérée a été retransmise sur la liaison à laquelle il correspond ;
- ainsi que des moyens de libération des cellules (rdz) permettant l'inscription de l'adresse de la cellule considérée dans la mémoire d'adresses libérées (fal) seulement lorsque tous les bits de l'emplacement considéré de la mémoire de diffusion (MD) ont ladite valeur opposée.

2. Dispositif de commutation selon la revendication 1, caractérisé en ce qu'il comporte, en outre, un circuit d'inhibition d'enregistrement (pi) conditionné par un signal (adl) issu d'un contenu au moins d'une cellule reçue ou un signal (tle) issu de l'absence de cellule reçue et fournissant un signal d'inhibition (spi) :
et en ce que le dispositif d'adressage comprend un dispositif d'inhibition (pac, pal) influencé par ledit signal d'inhibition (spi), de telle sorte qu'aucun emplacement de mémoire ne soit alors occupé dans la mémoire tampon (MT).

3. Dispositif de commutation conforme à la revendication 2, caractérisé en ce qu'un circuit de commande de lecture de ladite mémoire d'adresses libérées (fal) comprend un moyen (pal) sur lequel agit ledit signal d'inhibition (spi) pour y empêcher la lecture d'une adresse.

4. Dispositif de commutation conforme à la revendication 1 et caractérisé en ce que la mémoire d'adresses libérées (fal) est une mémoire FIFO.

5. Dispositif de commutation conforme à l'une quelconque des revendications 2 à 4, caractérisé en ce que le circuit de réception d'une liaison d'entrée comprend un circuit d'identification d'absence de cellule (bca, bcd, psv), lequel fournit un signal (tle) qui est transmis audit circuit d'inhibition d'enregistrement (pi) pour produire ledit signal d'inhibition (spi).

6. Dispositif de commutation conforme à l'une quelconque des revendications 2 à 5, caractérisé en ce qu'un circuit de décodage d'adresse (cda) est prévu, recevant la partie d'adresse (AD1) d'une étiquette (EE) d'une cellule présentée à la mémoire tampon, une sortie (ad1) de ce circuit de décodage d'adresse (cda) fournissant un signal en présence d'une cellule devant ne pas être retransmise, qui est transmis audit circuit d'inhibition d'enregistrement (pi) pour produire ledit signal d'inhibition (spi).

## Claims

1. Device for switching data transmitted by asynchronous time-division multiplexing comprising receive circuits each associated with an input link and supplying cells received via said input link, transmit circuits each associated with an output link and transmitting retransmitted cells on said output link, a buffer memory storing received cell supplied by the receive circuits and delivering cells to be retransmitted to the transmit circuits and a buffer memory addressing device comprising:
- an address counter (cae) having an indexing input (ei) receiving an indexing signal which increments the counter by one step after a cell is written into the buffer memory;
- a released address memory (fal) receiving the addresses of buffer memory locations released by cells already retransmitted and supplying said addresses instead of the address counter (cae), immediately it holds at least one;
characterized in that, to enable a received cell to be retransmitted to more than one output link (broadcasting), it further comprises:
- a broadcast memory (MD) having a memory location for each address of the buffer memory (MT) for storing a respective bit for each output link;
- writing means (mxd, pei, mxg) for assigning a specific value to a bit if a cell stored in a location of the buffer memory (MT) must be retransmitted on the respective link;
- deleting means (mdf) for assigning said bit the converse value when said cell has been retransmitted on the respective link;
- and cell release means (rdz) enabling the address of said cell to be written into the released addresses memory (fal) only when all bits of the respective location of the broadcast memory (MD) have said converse value.

2. Switching device according to claim 1 characterized in that it further comprises a write disabling circuit (pi) conditioned by a signal (adl) dependent on the content of at least one received cell or a signal (tle) dependent on the absence of any received cell and producing a disabling signal (spi);
and in that the addressing device includes a disabling device (pac, pal) conditioned by said disabling signal (spi) such that no memory location in the buffer memory (MT) is then occupied.

3. Switching device according to claim 2 characterized in that a read control circuit of said released address memory (fal) comprises means (pal) on which said disabling signal (spi) is operative to prevent the reading of an address in it.

4. Switching device according to claim 1 characterized in that the released address memory (fal) is an FIFO memory.

5. Switching device according to any one of claims 2 to 4 characterized in that the receive circuit of an input link comprises a cell absence identification circuit (bca, bcd, psv) which supplies a signal (tle) which is transmitted to said write disabling circuit (pi) to produce said disabling signal (spi).

6. Switching device according to any one of claims 2 to 5 characterized in that an address decoding circuit (cda) is provided to receive the address part (AD1) of a label (EE) of a cell presented to the buffer memory, an output (adl) of this address decoding circuit (cda) supplying a signal in the presence of a cell that is not to be retransmitted, which signal is transmitted to said write disabling circuit (pi) to produce said disabling signal (spi).

## Patentansprüche

1. Einrichtung zum Durchschalten von Daten, die in Form einer asynchronen Zeitmultiplexierung übertragen werden, mit Empfangsschaltungen, die je einer Eingangsleitung zugeordnet sind und Zellen liefern, die von dieser Eingangsleitung empfangen werden, mit Sendeschaltungen, die je einer Ausgangsleitung zugeordnet sind und Zellen aussenden, die über diese Ausgangsleitung weiterübertragen werden, mit einem Pufferspeicher, der die empfangenen und von den Empfangsschaltungen gelieferten Zellen speichert und weiterzuübertragende Zellen an die Sendeschaltungen liefert, und mit einer Einrichtung zum Adressieren des Pufferspeichers, der
- einen Adressenzähler (cae) mit Indexierungseingang (ei), der ein Indexierungssignal empfängt, das im Anschluß an die Einspeicherung einer Zelle in den Pufferspeicher den Zähler um einen Schritt weiterschaltet, und
- einen Speicher für freigegebene Adressen (fal) aufweist, der die Adressen der von den bereits weiterübertragenen Zellen freigegebenen Pufferspeicherplätze empfängt und sie anstelle des Adressenzählers (cae) ausgibt, sobald er mindestens eine Adresse enthält,
dadurch gekennzeichnet, daß die Vorrichtung, um eine empfangene Zelle an mehrere Ausgangsleitungen (Verbreitung) übermitteln zu können, zusätzlich aufweist:
- einen Verbreitungsspeicher (MD), der einen Speicherplatz für jede der Adressen des Pufferspeicher (MT) enthält und der zur Aufnahme eines Bits entsprechend einer Ausgangsleitung vorgesehen ist;
- Einschreibmittel (mxd, pei, mxa), die es ermöglichen, dem betreffenden Bit einen besonderen Binärwert zuzuweisen, wenn eine im Speicherplatz des Pufferspeichers (MT) enthaltene Zelle über diejenige Leitung weiterübertragen werden soll, zu der es gehört;
- Auslöschmittel (mdf), um dem Bit den entgegengesetzten Binärwert zu geben, wenn die betreffende Zelle über die Verbindung weiterübertragen worden ist, zu der es gehört,
- sowie Mittel zur Freigabe der Zellen (rdz), die das Einschreiben der Adresse der betreffenden Zelle in den Speicher für freigegegebene Adressen (fal) nur dann erlauben, wenn alle Bits des betreffenden Platzes des Verbreitungsspeichers (MD) den entgegengesetzten Binärwert besitzen.

2. Durchschalteinrichtung gemaß Anspruch 1, dadurch gekennzeichnet, daß sie weiter eine Speichersperrschaltung (pi) enthält, die von einem Signal (adl), das aus dem Inhalt mindestens einer empfangenen Zelle hervorgegangen ist, oder von einem Signal (tle) aktiviert wird, das aus dem Fehlen einer empfangenen Zelle hervorgegangen ist, und die ein Sperrsignal (spi) liefert,
und daß die Adressiereinrichtung eine Sperreinrichtung (pac, pal) aufweist, die von dem Sperrsignal (spi) gesteuert wird, derart, daß dann kein Speicherplatz im Pufferspeicher (MT) besetzt wird.

3. Durchschalteinrichtung gemäß Anspruch 2, dadurch gekennzeichnet, daß eine Lesesteuerschaltung des Speichers für freigegebene Adressen (fal) ein Mittel (pal) aufweist, auf das das Sperrsignal (spi) einwirkt, um im Speicher das Lesen einer Adresse zu verhindern.

4. Durchschalteinrichtung gemäß Anspruch 1, dadurch gekennzeichnet, daß der Speicher für freigegebene Adressen (fal) ein FIFO-Speicher ist.

5. Durchschalteinrichtung gemäß einem beliebigen Anspruch 2 bis 4, dadurch gekennzeichnet, daß die Empfangsschaltung einer Eingangsleitung eine Identifikationsschaltung für das Fehlen von Zellen (bca, bcd, psv) aufweist, die ein Signal (tle) liefert, das an die Speichersperrschaltung (pi) übertragen wird, um das Sperrsignal (spi) zu erzeugen.

6. Durchschalteinrichtung gemäß einem beliebigen Anspruch 2 bis 5, dadurch gekennzeichnet, daß eine Adressendekodierschaltung (cda) vorgesehen ist, die den Adressenabschnitt (AD1) eines Vorspanns (EE) einer dem Pufferspeicher zugeführten Zelle empfängt, wobei ein Ausgang (adl) dieser Adressendekodierschaltung (cda) bei Anwesenheit einer nicht weiterzuübertragenden Zelle ein Signal liefert, das an die Speichersperrschaltung (pi) übertragen wird, um das Sperrsignal (spi) zu erzeugen.
